(19) Europäisches Patentamt
European Patent Office
Office européen des brevets

(11) **EP 3 538 359 B1**

(12) **EUROPÄISCHE PATENTSCHRIFT**

(45) Veröffentlichungstag und Bekanntmachung des Hinweises auf die Patenterteilung:
**19.10.2022   Patentblatt 2022/42**

(21) Anmeldenummer: **17804462.4**

(22) Anmeldetag: **03.11.2017**

(51) Internationale Patentklassifikation (IPC):
**B32B 5/14** (2006.01)   **B32B 27/12** (2006.01)
**B32B 27/30** (2006.01)   **B32B 27/32** (2006.01)
**B32B 3/26** (2006.01)   **B32B 3/30** (2006.01)
**D06N 7/00** (2006.01)   **E04F 15/10** (2006.01)

(52) Gemeinsame Patentklassifikation (CPC):
**B32B 3/266; B32B 3/263; B32B 3/30; B32B 5/142; B32B 27/12; B32B 27/304; B32B 27/322; E04F 15/107;** B32B 2250/03; B32B 2250/40; B32B 2262/10; B32B 2262/101; B32B 2307/724; B32B 2419/04

(86) Internationale Anmeldenummer:
**PCT/EP2017/078196**

(87) Internationale Veröffentlichungsnummer:
**WO 2018/087007 (17.05.2018 Gazette 2018/20)**

(54) **VERFAHREN ZUR HERSTELLUNG VON LAMINAT-VERBUNDWERKSTOFFEN**

PROCESS FOR THE PRODUCTION OF LAMINATE COMPOSITE MATERIALS

PROCÉDÉ DE FABRICATION DE MATÉRIAUX COMPOSITES STRATIFIÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.11.2016   DE 102016013314**

(43) Veröffentlichungstag der Anmeldung:
**18.09.2019   Patentblatt 2019/38**

(73) Patentinhaber: **Johns Manville Europe GmbH**
**86399 Bobingen (DE)**

(72) Erfinder: **ECKERT, Bernhard**
**91896 Freudenberg-Boxtal (DE)**

(74) Vertreter: **Dörr, Klaus**
**Dörr IP**
**Nordring 29**
**65719 Hofheim (DE)**

(56) Entgegenhaltungen:
**GB-A- 2 054 407     US-A1- 2004 185 231**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft ein Verfahren zur Herstellung von Laminat-Verbundwerkstoffen, sowie die nach diesem Verfahren hergestellten Laminat-Verbundwerkstoffe und deren Verwendung. Darüber hinaus eigenen sich die zur Herstellung der erfindungsgemäßen Laminat-Verbundwerkstoffe notwendigen Eingangsprodukte auch zur Herstellung von weiteren Verbundwerkstoffen

Laminat-Verbundwerkstoffe sind seit langem bekannt und finden in vielen Anwendungen ihren Einsatz. Moderne Laminat-Verbundwerkstoffe haben einen Schichtaufbau, bei dem jede einzelne Schicht eine spezielle Funktion übernimmt, sei es eine mechanische und/oder optisch/haptische Funktion. Je nach beabsichtigtem Einsatzzweck können so die Gesamteigenschaften optimal eingestellt werden. Insbesondere textile Flächengebilde, beispielsweise Vliese oder Gelege, aus verstärkenden Materialien kommen hierbei in zunehmenden Maß zum Einsatz.

Die Herstellung von Vliesen, insbesondere von nassgelegten Vliesen, ist seit mehr als 50 Jahren bekannt und bedient sich der ursprünglich für die Papierherstellung entwickelten Verfahren und Vorrichtungen.

Zur Herstellung von nassgelegten Vliesen, beispielsweise Glasfaservliesen, werden die Glasfasern in einem sogenannten Pulper in Wasser dispergiert, wobei der Anteil an Glasfasern ca. 0,1 - 1 Gew.-% beträgt. Hierbei muss darauf geachtet werden, dass die Glasfasern während der Dispergierung so wenig wie möglich geschädigt werden, d.h. im Wesentlichen keine Faserbrüche auftreten. Die dispergierten Glasfasern werden in einem oder mehreren Vorratsgefäßen zwischengelagert. Der Austrag erfolgt über den Stoffauslauf, wobei die Konzentration an Glasfasern um einen Faktor 10 bis 20 verringert wird. Der Austrag erfolgt auf ein umlaufendes Maschinensieb, durch welches das Wasser abgesaugt und das nassgelegte Glasfaservlies gebildet wird. Das abgesaugte Wasser wird dem Prozess wieder zugeführt, d.h. recycliert. Anschließend wird auf das frisch gebildete Glasfaservlies ein Binder aufgebracht, welcher nach Trocknung bzw. Härtung eine Verfestigung des Glasfaservlieses bewirkt, so dass dieses aufgerollt bzw. weiterverarbeitet werden kann.

In Abhängigkeit von dem Anwendungsgebiet werden die Glasfasermaterialien, Glasfaserlängen und Glasfaserdurchmesser, sowie die Flächengewichte und der Binderauftrag eingestellt.

Glasfaservliese eignen sich u.a. zur Herstellung von flächiger Rollenware oder Bogenware, die für unterschiedlichste Anwendungen eingesetzt werden. Beispielsweise werden solche Vliese in Verbindung mit sogenannten B-stage fähigen Bindern, die schon seit einigen Jahre bekannt sind, u.a. in der Herstellung von dekorativen Verbundwerkstoffen, z.B. auf Basis von Holzwerkstoffen, eingesetzt.

Darüber hinaus sind auch Vliesstoffe, insbesondere Glasvliesstoffe für die Imprägnierung mit B-stage Harzen bereits bekannt, wobei mineralische Füllstoffe im B-stage Binderharz vorliegen können. Derartige Materialien eignen sich zur Herstellung von feuerfesten Laminaten, wie beispielsweise in EP2431173A1 beschrieben.

Des Weiteren sind auch Vliesstoffe mit mineralischen Füllstoffen für Gipsplattenverstärkungen oder sogenannte Malervliese mit mineralischen Beschichtungen, die nach Installation an der Wand nochmals einen Anstrich erfordern, bekannt.

Zur Verwendung der vorstehend genannten Materialien, die in Schiffen, Eisenbahnen oder insbesondere in öffentlichen und/oder gewerblichen Gebäuden Verwendung finden, müssen hinsichtlich der Gefahren, die durch Brände hervorgerufen werden können, immer sicherer werden. Die gesteigerten Brandschutzanforderungen sind durch sich stetig verschärfende gesetzliche Bestimmungen der Fachwelt bekannt. Diese erhöhten Anforderungen schließen zunehmend auch einzelne Bestandteile von Innenausbauten, wie beispielsweise Laminate für Möbel, Gebäudeelemente, Fußbodenelemente mit ein. Derartige Elemente sind, für sich alleine genommen, zum Teil als nicht sicher hinsichtlich der Brandschutzanforderungen einzustufen oder aber nur mit hohem Aufwand brandschutzgeeignet herzustellen. Zum Beispiel werden bei papierbasierenden Laminaten hohe Anteile an Flammschutzmittel beigeben, um brennbares Papier schwer-entflammbar oder unbrennbar zu machen. Durch die Verwendung von Glasvliesen als Träger von solchen Werkstoffen sind die Brandschutzanforderungen zumeist leichter zu befriedigen.

Bei der Herstellung von Luxury Vinly Tile (LVT) Bodenbelägen wäre es daher wünschenswert die positiven Eigenschaften von verstärkenden textilen Flächengebilden auf Basis von Glasfasern zu integrieren. Bei LVT Materialien handelt es sich um Laminat-Verbundwerkstoffe auf Basis von halogenierten Polymeren, insbesondere auf Basis von Polyvinylchlorid (PVC), die einen sandwichartigen Laminataufbau aufweisen.

Erste Lösungsversuche zeigen, dass es jedoch nicht trivial ist ein verstärkendes textiles Flächengebilde auf Basis von Glasfasern zwischen zwei Schichten auf Basis von halogenierten Polymeren, insbesondere auf Basis von Polyvinylchlorid (PVC), zu integrieren. Aus diesem Grund waren bislang nur Verstärkung auf Basis von individuellen Glasfasern/Glasfäden in Form von fadenförmigen Gelegen oder als Glasrovings bekannt. Bei der Herstellung solcher Verbundwerkstoffe werden praktisch ausschließlich dis-kontinuierliche Verfahren eingesetzt.

Um jedoch das volle Potential von Glasfaser-Verstärkungen auszuschöpfen bestand die Aufgabe, verstärkende textile Flächengebilde auf Basis von Glasfasern in sandwichartige Laminat-Verbundwerkstoffe auf Basis von halogenierten Polymeren, insbesondere auf Basis von Polyvinylchlorid (PVC), zu integrieren. Dabei sollen auch kontinuierliche Herstellverfahren zum Einsatz kommen können.

Gegenstand der vorliegenden Erfindung ist somit ein Verfahren zur Herstellung von Laminat-Verbundwerkstoffen auf Basis von halogenierten Polymeren, insbesondere auf Basis von Polyvinylchlorid gemäß Anspruch 7.

In einer Variante des erfindungsgemäßen Verfahrens können auf das flächige Gebilde optional eine oder mehrere zusätzliche Schichten aufgebracht werden bzw. vorliegen, beispielsweise Dekor- und/oder Schutzschichten, wobei diese zusätzlichen Schichten bereits vorliegen oder wahlweise vor bzw. nach dem Laminieren gemäß Maßnahme (iv) aufgebracht werden. Diese zusätzlichen Schichten befinden sich auf der Seite des ersten und/oder zweiten flächigen Gebildes, die dem textilen Flächengebilde abgewandt ist, d.h. auf einer dem beiden Außenseiten des fertigen Laminat-Verbundwerkstoffs.

Weiterer Gegenstand der vorliegenden Erfindung ist ein sandwichartiger Laminat-Verbundwerkstoff auf Basis von halogenierten Polymeren, insbesondere auf Basis von Polyvinylchlorid gemäß Anspruch 8

In einer Variante der Erfindung kann der erfindungsgemäße Laminat-Verbundwerkstoff auf mindestens einer Außenseite noch optional eine oder mehrere zusätzliche Schichten aufweisen, beispielsweise Dekor- und/oder Schutzschichten. Diese zusätzlichen Schichten liegend bereits auf dem flächige

Gebilde vor oder werden wahlweise vor bzw. nach dem Laminieren gemäß Verfahrensmaßnahme (iv) aufgebracht. Diese zusätzlichen Schichten befinden sich auf der Seite des ersten und/oder zweiten flächigen Gebildes, die dem textilen Flächengebilde abgewandt ist, d.h. auf einer dem beiden Außenseiten des fertigen Laminat-Verbundwerkstoffs.

Nassgelegte, textile Flächengebilde aus Glasfasern mit Bereichen hoher und niedriger Luftdurchlässigkeit sowie deren Herstellung sind bereits grundsätzlich aus U.S. Patent. 5,462,642 bekannt.

Weiterer Gegenstand der vorliegenden Erfindung ist die Verwendung eines textilen Flächengebildes auf Basis von anorganischen Fasern, vorzugsweise Glasfasern gemäß Anspruch 6.

Weiterer Gegenstand der vorliegenden Erfindung ist somit ein Verbundwerkstoff gemäß Anspruch 9.

## Flächiges Gebilde aus halogeniertem Polymer

Bei dem erfindungsgemäß eingesetzten flächigen Gebilde aus halogeniertem Polymer handelt es sich vorzugsweise um solche auf Basis von Polyvinylchlorid (PVC). Das flächige Gebilde kann in Form einer Folie, üblicherweise aber in Form eines extrudierten oder kalandrierten Gebildes, beispielsweise einer Platte, eingesetzt werden und unterliegt grundsätzlich keiner besonderen Einschränkung, üblicherweise handelt es sich um Materialien die bereits in der Herstellung von sandwichartigen Laminat-Verbundwerkstoffen Einsatz finden, insbesondere bei der Herstellung Luxury Vinly Tile (LVT).

Die erfindungsgemäßen flächigen Gebilde aus halogeniertem Polymer können sich auch erst bei der Verpressung des Laminates bilden, d.h. während der Laminierung. Dazu werden auf das Ablageband, beziehungsweise auf das textile Flächengebilde, Partikel oder Chips aus halogeniertem Polymer, vorzugsweise aus PVC, in loser Form aufgebrachte. Das flächige Gebilde bildet sich durch Aufschmelzen der Partikel bzw. Chips bei der Verpressung bzw. Laminierung. Dieses Verfahren kann vorzugsweise im kontinuierlichen Betrieb eingesetzt werden, da höhere Presstemperaturen und damit kürzere Zykluszeiten möglich sind.

Die erfindungsgemäßen sandwichartigen Laminat-Verbundwerkstoffe auf Basis von halogenierten Polymeren, insbesondere auf Basis von Polyvinylchlorid (PVC), und textilem Flächengebilde auf Basis von anorganischen Fasern, vorzugsweise Glasfasern, weisen, insbesondere bei der Herstellung Luxury Vinly Tile (LVT), üblicherweise eine Gesamtdicke zwischen 1mm und 15mm auf. Die erfindungsgemäß eingesetzten textilen Flächengebilde auf Basis von anorganischen Fasern, insbesondere die nassgelegten Glasfaservliese haben vorzugsweise eine Dicke d im Bereich min. 0,2mm. Die Dicke des textilen Flächengebildes sollte 20% der Gesamtdicke des Laminates nicht überschreiten.

## Textiles Flächengebilde auf Basis von anorganischen Fasern

Bei dem erfindungsgemäß eingesetzten textilen Flächengebilde auf Basis von anorganischen Fasern, vorzugsweise Glasfasern, handelt es sich insbesondere um nassgelegte Vliese auf Basis von anorganischen Fasern, vorzugsweise Glasfasern.

Bei den eingesetzten Glasfasern handelt es sich um diskontinuierliche Fasern, d.h. sogenannte Stapel- bzw. Schnittfasern. Neben Glasfasern können auch andere anorganische Fasern, beispielsweise keramische Fasern und/oder Mineralfasern bzw. auch Gemische derselben verwendet werden, welche die Glasfasern zumindest teilweise ersetzen.

Geeignete Mineral- und keramische Fasern sind beispielsweise Alumosilikat-, Keramik-, Dolomit- Wollastonitfasern oder aus Fasern von Vulkaniten, vorzugsweise Basalt-, Diabas- und/oder Melaphyrfasern, insbesondere Basaltfasern. Diabase und Melaphyre werden zusammengefasst als Paläobasalte bezeichnet und Diabas wird auch gerne als Grünstein bezeichnet.

Geeignete Glasfasern umfassen jene, die aus A-Glas, E-Glas, S-Glas, C-Glas, T-Glas oder R-Glas hergestellt wurden.

Die durchschnittliche Länge der Mineralfasern oder Glasfasern beträgt üblicherweise zwischen 5 und 120 mm, vorzugsweise 5 bis 30 mm. Der durchschnittliche Faserdurchmesser der Mineralfasern oder Glasfasern beträgt üblicherweise zwischen 5 und 30 $\mu$m, vorzugsweise zwischen 6 und 22 $\mu$m, besonders bevorzugt zwischen 8 und 18$\mu$m.

Neben den vorstehend genannten Durchmessern können auch sogenannte GlasMikrofasern Verwendung finden. Der bevorzugte durchschnittliche Durchmesser der Glasmikrofasern ist hierbei zwischen 0,1 und 5 $\mu$m.

Das erfindungsgemäß eingesetzte textile Flächengebilde auf Basis von Glasfasern, insbesondere jedoch das nassgelegte Vliese auf Basis von Glasfasern, ist mit einem Binder verfestigt. Der anwesende Binder kann ganz oder auch nur teilweise ausgehärtet sein.

Der Binder wird üblicherweise auf das frisch gebildete textile Flächengebilde auf Basis von anorganischen Faser, vorzugsweise Glasfasern, welches vorzugsweise ein nassgelegtes Faservlies, vorzugsweise ein nassgelegtes Glasvlies, ist und sich noch auf dem umlaufenden Maschinensieb bei der Herstellung befindet, aufgebracht.

Der Binder wird dabei vorzugweise in Form eines wässrigen Bindersystems aufgebracht, welches mindestens einen organischen Binder aufweist. Der Anteil an organischen Binder(n) im wässrigen Bindersystem beträgt üblicherweise zwischen 10 und 40 Gew.-%, bevorzugt zwischen 15 und 30 Gew.-%, wobei sich die Angabe auf das Bindersystem nach vollständiger Trocknung bezieht.

Die gesamte Auftragsmenge des organischen Binder beträgt üblicherweise zwischen 10 und 40 Gew.-%, bevorzugt zwischen 15 und 30 Gew.-% beträgt, wobei sich die Angabe auf das Gesamtgewicht des Vlieses nach vollständiger Trocknung bezieht.

Überschüssiger Binder kann über das Maschinensieb abgesaugt werden, so dass das Bindersystem gleichmäßig verteilt vorliegt.

Die organischen Binder(n) im Bindersystem unterliegen grundsätzlich keiner Beschränkung, so dass alle in der Vliesherstellung bekannten organischen Binder eingesetzt werden können. Aufgrund der späteren Verwendung werden solche Binder, d.h. organische Binder und anorganische Binder, eingesetzt, die mit dem halogenierten Polymer, insbesondere dem Polymer auf Basis von Polyvinylchlorid (PVC) kompatibel sind.

Bei den organischen Bindern handelt es sich um chemische Binder, vorzugsweise auf Basis von Harnstoff-Formaldehyd, Phenol-Formaldehyd, MelaminFormaldehyd oder Mischungen daraus, formaldehyd-freie Binder, selbstvernetzende Binder, die ohne Zusatz eines Katalysators chemisch vollständig durchreagieren. Die Vernetzung wird vorzugsweise thermisch induziert. Geeignete weitere Binder sind Polycarboxylate, insbesondere Polyacrylate, oder Copolymere auf Basis von Maleinsäure, Polymerdispersionen aus Vinylacetat und Ethylen, oder ähnliche Co-Binder. Besonders geeignet sind Harnstoff-Binder. Die vorstehend genannten chemischen Binder können zusätzlich noch Saccharide und/oder Stärke aufweisen.

Neben den vorstehend genannten organischen Bindern können auch anorganische Binder verwendet werden. Solche anorganischen Binder können die vorstehend genannten organischen Binder fast vollständig oder zumindest teilweise ersetzen, d.h. in Mischungen mit den vorstehend genannten organischen Bindern verwendet werden. Ein geeigneter anorganischer Binder ist beispielsweise Wasserglas, insbesondere auf Natriumsilikat-Basis. Der Anteil von anorganischen Bindern liegt zwischen 0 - 18 Gew.-%, wobei sich die Angabe auf das Bindersystem nach vollständiger Trocknung bezieht.

Der Auftrag des wässrigen Bindersystems erfolgt durch bekannte Verfahren. Dazu eignen sich insbesondere Rakel, Auftragswalze, Schlitzdüse, oder Vorhangbeschichtungsverfahren.

Das wässrige Bindersystem kann zudem bekannte Zusätze enthalten. Der Anteil dieser Additive im wässrigen Bindersystem liegt zwischen 0 - und höchstens 5 Gew.-%, wobei sich die Angabe auf das Bindersystem nach vollständiger Trocknung bezieht.

Die Trocknung des Vlieses und die Aushärtung des Binders erfolgt üblicherweise bei Temperaturen zwischen 90°C und max. 250°C in einem Trockner, wobei die Verweilzeit im Trockner typischerweise zwischen 30 und 60 Sekunden bei dem vorstehend genannten Temperaturbereich betragen. Die Trocknung bewirkt, dass die Binder aushärten bzw. vernetzen und vorhandenes Restwasser entfernt wird.

Zur Trocknung werden Trockenvorrichtungen verwendet, die bereits Stand der Technik in der Fasertechnologie sind. Üblicherweise erfolgt die Trocknung in einem Heißluft-Trockner.

Die erfindungsgemäß hergestellten und eingesetzten textilen Flächengebilde auf Basis von anorganischen Fasern, bei denen es sich vorzugsweis um nassgelegte Vliese auf Basis von anorganischen Fasern handelt, die vorzugsweise aus Glasfasern aufgebaut werden, weisen aufgrund des speziellen verwendeten Maschinensiebes Bereiche mit hoher Luftdurchlässigkeit und Bereiche mit niedriger Luftdurchlässigkeit auf. Die Bereiche mit hoher Luftdurchlässigkeit und die Bereiche mit niedriger Luftdurchlässigkeit weisen vorzugsweise eine Differenz in der Luftdurchlässigkeit von min. 50% auf, d.h. die Luftdurchlässigkeit der Bereiche mit hoher Luftdurchlässigkeit ist min. 50% höher als die Luftdurchlässigkeit der Bereiche mit niedriger Luftdurchlässigkeit. Besonders bevorzugt beträgt die Differenz in der Luftdurchlässigkeit von min. 100% und mehr.

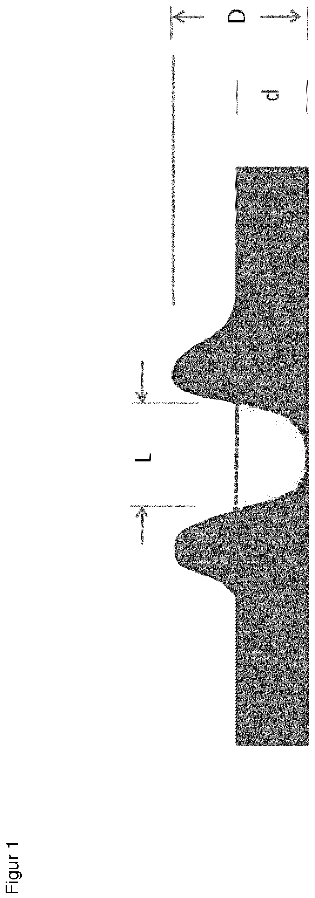

Die erfindungsgemäß hergestellten und eingesetzten textilen Flächengebilde auf Basis von anorganischen Fasern, insbesondere auf Basis von Glasfasern, zeichnen sich durch Bereiche mit hoher Luftdurchlässigkeit und Bereiche mit niedriger Luftdurchlässigkeit aus, diese Bereiche werden bei der Herstellung der textilen Fläche nach dem Nass-Legeverfahren erzeugt. Hierzu wird werden spezielle Maschinensiebe eingesetzt, bei denen die Siebe Bereiche mit geringerer oder keiner Durchlässigkeit für das Prozesswasser (Pulper-Wasser) aufweisen, in denen die Fasern dispergiert sind. Dies führt zu einer unregelmäßigen Ablagerung der Fasern auf dem Maschinensieb. Diese erfindungsgemäß hergestellten und eingesetzten textilen Flächengebilde auf Basis von anorganischen Fasern mit Bereichen hoher und niedriger Luftdurchlässigkeit sind in Abbildung 1 näher beschrieben.

Die erfindungsgemäß hergestellten und eingesetzten textilen Flächengebilde auf Basis von anorganischen Fasern, bei denen es sich vorzugsweis um nassgelegte Vliese auf Basis von anorganischen Fasern handelt, die vorzugsweise aus Glasfasern aufgebaut werden, weist vorzugweise ein mittleres Flächengewicht zwischen 10 und 350 g/m$^2$, insbesondere zwischen 20 und 200 g/m$^2$, besonders bevorzugt zwischen 40 und 140 g/m$^2$, wobei sich diesen Angaben auf ein Glasvlies ohne Berücksichtigung der Restfeuchte, d.h. nach Trocknung bezieht. In den Bereichen mit hoher Luftdurchlässigkeit beträgt das Flächengewicht maximal 70 Gew.-% des vorstehend genannten mittleren Flächengewichtes. Die Bereiche mit hoher Luftdurchlässigkeit zeichnen sich weiter dadurch aus, dass diese eine Geometrie aufweisen, die durch die Parameter d, D, bzw. L sowie L1 und L2 definiert werden. Am Rand der Bereiche mit hoher Luftdurchlässigkeit ist darüber hinaus eine Überhöhung vorhanden, die durch die Herstellung bedingt wird. Die Bereiche mit Überhöhung führen, insbesondere nach der Laminierung, zu Bereichen im textilen Flächengebilde mit einer höheren spezifischen Dichte und bewirken eine zusätzliche umlaufende Verstärkung um die Bereiche mit hoher Luftdurchlässigkeit, die ein "Ausreißen" der monolithischen Kontaktflächen zusätzlich erschweren.

Die Bereiche mit hoher Luftdurchlässigkeit werden Umgangssprachlich auch als "Loch" oder "Vertiefung" beschrieben und als Bereich definiert in dem die lokale Vliesdicke, wie in Abbildung 1 gezeigt, max. 80% der mittleren Vliesdicke d beträgt.

In Abbildung 1 wird das erfindungsgemäß hergestellte und eingesetzte textile Flächengebilde auf Basis von anorganischen Fasern, insbesondere ein nassgelegtes Glasfaservlies, näher beschrieben. Die Geometrie der Bereiche mit hoher Luftdurchlässigkeit wird mit Hilfe von zwei Längen definiert, d.h. eine größere Länge L1 und eine senkrecht zu L1 liegende kleinere Länge L2, wobei L1 > 5mm ist und das Verhältnis L1/ L2 im Bereich von 1 - 10, vorzugsweise 1 - 5, liegt. Das Verhältnis L1/ L2 = 1 beschreibt somit eine Rund-Geometrie. Am Rand der Bereiche mit hoher Luftdurchlässigkeit ist darüber hinaus eine Überhöhung vorhanden. Die Überhöhung, d.h. die Differenz $\Delta$ aus D-d, darf max. 20% der Dicke d betragen. Somit gilt die Beziehung $\Delta$ = (D - d)/d < 20%.

Die erfindungsgemäß hergestellten und eingesetzten textilen Flächengebilde auf Basis von anorganischen Fasern, insbesondere die nassgelegten Glasfaservliese haben vorzugsweise eine Dicke d im Bereich zwischen 0,2 und 2 mm.

Die erfindungsgemäß hergestellten und eingesetzten textilen Flächengebilde auf Basis von anorganischen Fasern, insbesondere die nassgelegten Glasfaservliese haben eine Luftdurchlässigkeit von > 1500 l/m$^2$ sec.

Die Bereiche mit hoher Luftdurchlässigkeit sind in der Gesamtfläche des textilen Flächengebilde auf Basis von anorganischen Fasern, insbesondere den nassgelegten Glasfaservliese, gleichmäßig oder ungleichmäßig verteilt und werden durch die Bereiche mit geringer Luftdurchlässigkeit voneinander getrennt, wobei die Abstände zwischen den jeweiligen Bereichen mit hoher Luftdurchlässigkeit vorzugsweise zwischen 5 und 20mm beträgt. Insbesondere bei Anwendungen als Verbundwerkstoff, insbesondere als Wand oder Deckenplatte, in denen der dekorative Charakter im Vordergrund steht können die Muster auch abweichen und beispielsweise rapportartig ausgebildet sein.

Die Fläche der Bereiche mit hoher Luftdurchlässigkeit (monolithischer Bereich) beträgt zwischen 5 und 90% der Gesamtfläche des textilen Flächengebildes auf Basis von anorganischen Fasern, insbesondere des nassgelegten Glasfaservlieses.

Die erfindungsgemäß hergestellten und eingesetzten textilen Flächengebilde auf Basis von anorganischen Fasern, bei denen es sich um nassgelegte Vliese auf Basis von anorganischen Fasern handelt, die vorzugsweise aus Glasfasern aufgebaut werden, weisen vorzugweise noch weitere Fasern aus organischen Polymeren auf. Bei diesen organischen Polymerfasern handelt es sich insbesondere um Fasern aus schmelzspinnbaren thermoplastischen, synthetischen Polymeren, die mit dem mit dem halogenierten Polymer, insbesondere dem Polymer auf Basis von Polyvinylchlorid (PVC) kompatibel sind.

Des Weiteren weisen die erfindungsgemäß hergestellten und eingesetzten textilen Flächengebilde auf Basis von anorganischen Fasern, bei denen es sich vorzugsweis um Vliese auf Basis von anorganischen Fasern handelt, die vorzugsweise aus Glasfasern aufgebaut werden, noch Aviagen bzw. Schlichten auf den Fasern auf, die eine Benetzung und/oder Anbindung, auch kovalente Anbindung, an das halogenierte Polymer, insbesondere dem Polymer auf Basis von Polyvinylchlorid (PVC), begünstigen.

## Herstellung des textilen Flächengebildes auf Basis von anorganischen Fasern

Die Herstellung des erfindungsgemäß eingesetzten textilen Flächengebilde auf Basis von anorganischen Fasern, bei denen es sich um nassgelegte Vliese auf Basis von anorganischen Fasern handelt, die vorzugsweise aus Glasfasern aufgebaut werden, erfolgt mittels an sich bekannter Methoden. Wie bereits erwähnt sind nassgelegte, textile Flächengebilde aus Glasfasern mit Bereichen hoher und niedriger Luftdurchlässigkeit sowie deren Herstellung bereits grundsätzlich aus U.S. Patent. 5,462,642 bekannt.

Die Erzeugung der Bereiche mit hoher Luftdurchlässigkeit und der Bereiche mit niedriger Luftdurchlässigkeit erfolgt durch den Einsatz spezieller Maschinensiebe in der Herstellung der Flächengebilde.

Die im Folgenden beschriebenen Prozesse beziehen sich beispielhaft auf die Herstellung von Glasfaservliesen, jedoch sind die entsprechenden Prozessschritte auch bei anderen Fasermaterialien, insbesondere bei anorganischen Fasern, ähnlich und dem Fachmann bekannt.

Grundsätzlich werden die Fasern in einem sogenannten Pulper in Wasser dispergiert, wobei im Falle von Glasfasern der Anteil der Glasfasern ca. 0,1 Gew.- % bis 1 Gew % beträgt.

Die dispergierten Glasfasern werden üblicherweise in einem oder mehreren Vorratsgefäßen zwischengelagert, wobei Ablagerung der Glasfasern verhindert werden muss. Auch diese Maßnahme ist dem Fachmann bekannt Der Austrag der Glasfaser/Wasser Dispersion bzw. der Auftrag gemäß Maßnahme (ii) erfolgt über den Stoffauslauf, wobei die Konzentration an Glasfasern um einen Faktor 10 - 20 verringert wird. Auch diese Maßnahme ist dem Fachmann bekannt.

Dem zur Herstellung der Glasfaser/Wasser Dispersion eingesetzten Wasser können weitere Hilfsstoffe zugesetzt werden. Hierbei handelt es sich üblicherweise um Verdicker und Tenside. Auch diese Maßnahme ist dem Fachmann bekannt.

Der Austrag der Faser/Wasser Dispersion erfolgt auf ein spezielles umlaufendes Maschinensieb, welches eine unterschiedliche Durchlässigkeit für das vorhandene Wasser aufweist. Hierdurch wird das Wasser unterschiedlich schnell abgesaugt und es entstehen auf dem Maschinensieb Vliese mit Bereichen von hoher Luftdurchlässigkeit und Bereiche von niedriger Luftdurchlässigkeit.

Das abgesaugte Wasser wird dem Prozess wieder zugeführt, d.h. recycliert. Zur Herstellung des nassgelegten Glasvlieses werden bekannte Vorrichtungen verwendet, beispielsweise der im Markt bekannte Voith Hydroformer® oder der Sandy Hill Deltaformer®.

Der Auftrag des Binders sowie die Trocknung wurden bereits vorstehend offenbart und sind auch vor das beispielhaft beschriebene Verfahren gültig.

## Verstärkung

Die erfindungsgemäß hergestellten und eingesetzten textilen Flächengebilde auf Basis von anorganischen Fasern, bei denen es sich um nassgelegte Vliese auf Basis von anorganischen Fasern handelt, die vorzugsweise aus Glasfasern aufgebaut werden, können zusätzlich noch eine weitere Verstärkung aufweisen.

Die Zuführung von flächigen Verstärkungen erfolgt typischerweise auf der Oberseite des umlaufenden Maschinensiebes, auf welcher die Bildung des nassgelegten Glasfaservlieses erfolgt.

Die Zuführung von Verstärkungs-Fäden und/oder -Garne erfolgt wie im Falle der flächigen Verstärkung oder individuell, d.h. von oben oder der Seite, wobei die Verstärkungs-Fäden und/oder -Garne mittig in das gebildete Vlies eingebaut werden oder auf der Ober- und/oder Unterseite. Die Position des Einbaus ergibt sich aus dem genauen Ort der Zuführung im Bereich der Vliesbildung auf dem Maschinensieb. Letztlich ergeben sich im Einschränkungen lediglich aus der Bauart der eingesetzten Vliesbildner.

Bei den Verstärkungen handelt es sich vorzugsweise um Verstärkungs-Fäden und/oder -Garne erhalten, deren Young-Modul mindestens 5 GPa, bevorzugt mindestens 10 GPa, besonders bevorzugt mindestens 20 GPa, betragen.

Die Verstärkungsfäden, d.h. sowohl die Monofile, Rovings oder auch die Garne, haben einen Durchmesser zwischen 0,1 und 1 mm oder 10 - 2400 tex, vorzugsweise 0,1 und 0,5 mm, insbesondere 0,1 und 0,3 mm und besitzen eine Bruchdehnung von 0,5 bis 100 %, vorzugsweise 1 bis 60 %.

Bevorzugt werden als Verstärkungen Fäden, insbesondere Multifilamente und/oder Monofilamente, auf Basis von Kohlenstoff, Glas, Glasfaserrovings, Mineralfasern (Basalt) oder Drähte (Monofilamente) aus Metallen oder metallischen Legierungen eingesetzt.

Bevorzugte Verstärkungen bestehen aus wirtschaftlichen Gründen aus Glas-Multifilamenten in Form von - im Wesentlichen - parallelen Fadenscharen oder Gelegen. Meist erfolgt nur eine Verstärkung in Längsrichtung des Glasvlieses durch - im Wesentlichen -parallel laufende Fadenscharen.

Die Verstärkungsfäden können als Netze, Gitter oder Gelege angeordnet, eingesetzt werden. Weiterhin sind auch Verstärkungen in Form von Geweben und Multiaxial-Gelegen bevorzugt. Besonders bevorzugt werden Verstärkungen mit zueinander parallel laufenden Verstärkungsgarnen, also Kettfadenscharen, sowie Gelege oder Gitter.

Die Fadendichte kann in Abhängigkeit vom gewünschten Eigenschaftsprofil in weiten Grenzen schwanken. Bevorzugt beträgt die Fadendichte zwischen 20 und 250 Fäden pro Meter. Die Fadendichte wird senkrecht zur Fadenlaufrichtung gemessen. Die Verstärkungsfäden werden vorzugsweise vor der Bildung des Glasvlieses auf der Oberseite des umlaufenden Maschinensiebes zugeführt. Es ist jedoch auch möglich, die Fäden während der Bildung des Glasvlieses zuzuführen, so dass diese eingebettet werden.

**Verfahren zur Herstellung von Laminat-Verbundwerkstoffen auf Basis von halogenierten Polymeren**

Das erfindungsgemäße Verfahren zur Herstellung von Laminat-Verbundwerkstoffen auf Basis von halogenierten Polymeren, insbesondere auf Basis von Polyvinylchlorid ist in Anspruch 7 definiert.

In einer Variante des erfindungsgemäßen Verfahrens können auf das flächige Gebilde optional eine oder mehrere zusätzliche Schichten aufgebracht werden bzw. vorliegen, beispielsweise Dekor- und/oder Schutzschichten, wobei diese zusätzlichen Schichten bereits vorliegen oder wahlweise vor bzw. nach dem Laminieren gemäß Maßnahme (iv) aufgebracht werden. Diese zusätzlichen Schichten befinden sich auf der Seite des ersten und/oder zweiten flächigen Gebildes, die dem textilen Flächengebilde abgewandt ist, d.h. auf einer dem beiden Außenseiten des fertigen Laminat-Verbundwerkstoffs.

Die erfindungsgemäß eingesetzten flächigen Gebilde aus halogeniertem Polymer, insbesondere auf Basis von Polyvinylchlorid (PVC), wurden bereits vorstehend detailliert beschrieben. Im Verfahren werden diese entweder direkt (in-line) erzeugt oder zuvor (off-line) erzeugt und bereitgestellt bzw. zugeführt. Die Zuführung kann kontinuierlich, beispielsweise Zuführung von Rollen, oder aber auch dis-kontinuierlich, beispielweise durch Zuführung von vorkonfektionierten Materialien, erfolgen. Die Schritte (i), (ii) und (iii) können auch simultan erfolgen, beispielsweise bei Zuführung jeweils von Rollen.

Das in Schritt (ii) zugeführte textile Flächengebilde auf Basis von anorganischen Fasern, vorzugsweise Glasfasern, bedeckt üblicherweise die komplette Seite des flächigen Gebildes aus halogeniertem Polymer, insbesondere auf Basis von Polyvinylchlorid (PVC), und das in Schritt (iii) zugeführte zweite flächige Gebildes aus halogeniertem Polymer bedeckt wiederum das gesamte textile Flächengebildes auf Basis von anorganischen Fasern, vorzugsweise Glasfasern. Die in den Schritten (i), (ii) und (iii) eingesetzten flächigen Gebilde aus halogeniertem Polymer und das textile Flächengebildes auf Basis von anorganischen Fasern, vorzugsweise Glasfasern, sind vorzugsweise deckungsgleich, so dass es keiner Nacharbeitung der Kanten bedarf.

Neben dem vorstehend beispielhaften drei-schichtigen Aufbau, z.B. PVC->Glas->PVC, sind auch fünf-schichtige Aufbauten, z.B. PVC->Glas->PVC (Kern)->Glas->PVC denkbar. All diesen möglichen Aufbauten gemein ist eine Anordnung von mindestens einer sandwichartiger Laminatstruktur, bei der min. ein textiles Flächengebildes auf Basis von anorganischen Fasern, vorzugsweise Glasfasern, zwischen zwei flächigen Gebilden aus halogeniertem Polymer, insbesondere auf Basis von Polyvinylchlorid (PVC), angeordnet ist.

Das Laminieren in Schritt (iv) erfolgt durch Einwirkung von Druck und Temperatur durch Walzen oder Pressen in allgemein bekannter Weise. Üblicherweise beträgt die Temperatur während des Laminierens zwischen 80 und 140°C bei einem diskontinuierlichen Verfahren und 120 bis 180°C bei einem kontinuierlichen Pressverfahren. Die eingesetzten Drücke betragen üblicherweise 2 - 4 bar. Durch den Einsatz des erfindungsgemäßen textilen Flächengebildes mit Bereichen von hoher Luftdurchlässigkeit und Bereichen von niedriger Luftdurchlässigkeit treten die beiden zugewandten Flächen des flächigen Gebildes aus halogeniertem Polymer, insbesondere auf Basis von Polyvinylchlorid (PVC), durch die Bereiche des erfindungsgemäßen textilen Flächengebildes mit hoher Luftdurchlässigkeit in Kontakt und verbinden sich in diesen Bereichen monolithisch. Die monolithische Kontaktfläche der beiden zugewandten Flächen des flächigen Gebildes aus halogeniertem Polymer, insbesondere auf Basis von Polyvinylchlorid (PVC), beträgt vorzugsweise min. 5% (Flächen-%) bezogen auf die einsetzte Gesamtfläche an textilem Flächengebilde mit Bereichen von hoher Luftdurchlässigkeit und Bereichen von niedriger Luftdurchlässigkeit. Die monolithische Kontaktfläche sollte 90% (Flächen-%) bezogen auf die Gesamtfläche des textilen Flächengebildes nicht überschreiten.

**Laminat-Verbundwerkstoffen auf Basis von halogenierten Polymeren**

Der erfindungsgemäße sandwichartige Laminat-Verbundwerkstoff auf Basis von halogenierten Polymeren, insbesondere auf Basis von Polyvinylchlorid ist in Anspruch 8 definiert.

In einer Variante der Erfindung kann der erfindungsgemäße Laminat-Verbundwerkstoff auf mindestens einer Außenseite noch optional eine oder mehrere zusätzliche Schichten aufweisen, beispielsweise Dekor- und/oder Schutzschichten. Diese zusätzlichen Schichten liegend bereits auf dem flächige Gebilde vor oder werden wahlweise vor bzw. nach dem Laminieren gemäß Verfahrensmaßnahme (iv) aufgebracht. Diese zusätzlichen Schichten befinden sich auf der Seite des ersten und/oder zweiten flächigen Gebildes, die dem textilen Flächengebilde abgewandt ist, d.h. auf einer dem beiden Außenseiten des fertigen Laminat-Verbundwerkstoffs.

Die erfindungsgemäß eingesetzten flächigen Gebilde aus halogeniertem Polymer, insbesondere auf Basis von Polyvinylchlorid (PVC), sowie das textile Flächengebilde auf Basis von anorganischen Fasern, vorzugsweise Glasfasern, wurden bereits vorstehend detailliert beschrieben.

Die Dicke des erfindungsgemäßen sandwichartigen Laminat-Verbundwerkstoff auf Basis von halogenierten Polymeren, insbesondere auf Basis von Polyvinylchlorid (PVC), beträgt üblicherweise zwischen 1 und 15mm, vorzugsweise zwischen 3mm und 10 mm, wobei die eingesetzten textilen Flächengebilde auf Basis von anorganischen Fasern, insbesondere die nassgelegten Glasfaservliese, vorzugsweise eine Dicke d von min. 0,2mm aufweisen. Je nach Anwendung sind jedoch auch dünnere bzw. dickere Laminate möglich. Insbesondere bei der Herstellung Luxury Vinly Tile (LVT), beträgt die Gesamtdicke des Laminats üblicherweise zwischen 1mm und 20mm. Die Dicke des textilen Flächengebildes sollte 20% der Gesamtdicke des Laminates nicht überschreiten.

Die vorstehend genannte Gesamtdicke bezieht sich vorzugsweise auf einen drei-schichtigen Aufbau, d.h. z.B. PVC->Glas->PVC, sowie auch auf einen fünfschichtigen Aufbauten, d.h. z.B. PVC->Glas->PVC (Kern)->Glas->PVC.

Durch den erfindungsgemäßen Einsatz von textilen Flächengebilden auf Basis von anorganischen Fasern, vorzugsweise Glasfasern, die vorzugsweise ein Vlies, insbesondere ein Glasfaservlies, sind, können sandwichartige Laminat-Verbundwerkstoffe mit sehr homogenen mechanischen Eigenschaften realisiert werden, die nahezu monolithische Eigenschaften aufweisen. Die monolithische Kontaktfläche der beiden zugewandten Flächen des flächigen Gebildes aus halogeniertem Polymer, insbesondere auf Basis von Polyvinylchlorid (PVC), beträgt vorzugsweise min. 5% (Flächen-%) bezogen auf die einsetzte Gesamtfläche an textilem Flächengebilde mit Bereichen von hoher Luftdurchlässigkeit und Bereichen von niedriger Luftdurchlässigkeit.

Darüber hinaus ermöglicht der erfindungsgemäße Einsatz der speziellen textilen Flächengebilde eine schnellere und kostengünstigere sowie kontinuierliche Prozessführung, insbesondere bei sogenannten Rollen-Prozessen, bei denen alle benötigten Materialen als Rollenware zugeführt und verarbeitet werden.

### Anwendungen

Die erfindungsgemäßen sandwichartigen Laminat-Verbundwerkstoffe auf Basis von halogenierten Polymeren, insbesondere auf Basis von Polyvinylchlorid (PVC), und sandwichartige eingebundenem textilen Flächengebilde auf Basis von Glasfasern, können zur Herstellung von Verbundwerkstoffen und Laminaten, insbesondere zur Herstellung von "Luxury Vinyl Tile" (LVT), eingesetzt werden.

### Verfahren zur Herstellung von Verbundwerkstoffen zum Einsatz als Wand oder Deckenplatte

Ein Verfahren zur Herstellung von Verbundwerkstoffen zum Einsatz als Wand oder Deckenplatte umfasst die Maßnahmen:

(i) Erzeugen, Bereitstellen oder Zuführen eines Trägermaterials, insbesondere einer Gipskartonplatte oder eines faserförmigen Isolationsmaterials,
(ii) Aufbringen eines textilen Flächengebildes auf Basis von anorganischen Fasern, vorzugsweise Glasfasern, auf mindestens eine Seite des Trägermaterials gemäß Maßnahme (i),
(iii) Laminieren des gemäß Schritt (ii) erhaltenen Gebildes unter Einwirkung von Druck und/oder Temperatur, ggf. unter Verwendung von chemischen oder thermoplastischen Bindern,
dadurch gekennzeichnet, dass
(iv) das textile Flächengebilde das textile Flächengebilde auf Basis von anorganischen Fasern ein Flächengebilde gemäß einem oder mehreren der Ansprüche 1 bis 5 ist Vorzugsweise handelt es sich bei dem vorstehend genannten Verbundwerkstoff mit einem Trägermaterial um eine Wand oder Deckenplatte. Der Verbundstoff zeichnet sich durch eine besonders ästhetische Optik aus.

Bei dem gemäß (i) eingesetzten Trägern handelt es sich vorzugsweise um auf Holz basierende Materialien, wie z. B. Sperr- bzw. Lagenholz, Holzspanwerkstoff, insbesondere Spanplatten und OSB (Oriented Strand Boards), Holzfaserwerkstoff, insbesondere poröse Holzfaserplatten, diffusionsoffene Holzfaserplatten, harte (hochdichte) Holzfaserplatten (HDF) und mitteldichte Holzfaserplatten (MDF), und Arboform. Weiterhin sind auch Materialien, insbesondere Platten, aus Papier, Kork, Kartonagen, mineralischen Bestandteilen und/oder sogenannte Honeycombs möglich. Die Holzwerkstoffe sind üblicherweise platten- oder strangförmige Holzwerkstoffe, die durch Mischung der verschiedenen Holzpartikelformen mit natürlichen und/oder synthetischen Bindemittel im Zuge einer Heißverpressung hergestellt werden.

Die erfindungsgemäßen Träger umfassen außerdem Werkstoffe aus Holzfaserstoffen, Cellulosefasern, Naturfasern oder deren Mischungen und einem Binder, wobei der Anteil des Binders üblicherweise mehr als 15 Gew% beträgt. Die Werkstoffe sind gegebenenfalls durch Glas-, Basalt- oder synthetischen Fasern verstärkt

Bei den Papieren handelt es sich vorzugsweise um Papiere auf Basis von natürlichen, synthetischen, mineralischen oder keramischen Fasern oder auch von Mischungen dieser Fasertypen.

Bei den Kartonagen handelt es sich vorzugsweise um Kartonagen auf Basis von natürlichen und/oder synthetischen Fasern, wobei diese auch mineralische und/oder keramische Fasern umfassen sowie Mischungen aus diesen Fasertypen. Bei den mineralischen Platten handelt es sich vorzugsweise um handelsübliche Mineralkartonplatten mit beidseitigem Kartonagebezug, um Gipsfaserplatten, Keramikfaserplatten, Zement- oder Kalkplatten. Die Platten können gegebenenfalls mit natürlichen und/oder synthetischen Fasern verstärkt sein, wobei diese auch mineralische und/oder keramische Fasern umfassen können. Die Verstärkungsfasern können in Form von Filamenten, Monofilen oder als Stapelfasern vorliegen.

Neben den beschriebenen Materialien kann der Träger auch aus Kork oder anderen pflanzlichen Materialien bestehen.

Bei dem gemäß (i) eingesetzten faserförmigen Isolationsmaterialien handelt es sich um benannte Faservliese auf Basis von mineralischen Fasern, insbesondere um Faser aus Glas und/oder Mineralwolle, die mit dem textilen Flächengebilde auf Basis von anorganischen Fasern, vorzugsweise Glasfasern, verbunden werden, wobei dies vorzugsweise mittels thermoplastischer Kleber erfolgt. Die faserförmigen Isolationsmaterialien sind vorzugsweise selbsttragend, d.h. auf einer Trägerfolie aufgebracht. Die faserförmigen Isolationsmaterialien weisen vorzugsweise eine Dicke zwischen 5mm und 250mm auf.

Das Flächengewicht der im Verbundstoff enthaltenen Träger ist von der Endanwendung abhängig und unterliegt keiner besonderen Einschränkung.

Die zur Herstellung der vorstehend beschriebenen erfindungsgemäßen Verbundwerkstoff eingesetzten textilen Flächengebilde auf Basis von anorganischen Fasern, vorzugsweise Glasfasern, wobei das textile Flächengebilde ein Faservlies, vorzugsweise ein Glasfaservlies, ist und das Faservlies, vorzugsweise das Glasfaservlies, Bereiche mit hoher Luftdurchlässigkeit und Bereiche mit niedriger Luftdurchlässigkeit aufweist, sind bereits eingangs im Detail beschrieben; Deren bevorzugte Ausführungsformen sind auch für diese Verbundwerkstoff gültig.

## Messmethoden

| | |
|---|---|
| Luftdurchlässigkeit: | Die Bestimmung der Luftdurchlässigkeit erfolgt gemäß DIN EN ISO 9237:1995-12. Hierbei handelt es sich um die gemittelte Luftdurchlässigkeit ($LDL_{gesamt}$ [L/m$^2$s]), d.h. um eine Messung an einem textile Flächengebilde mit Bereichen mit höherer und niedriger Luftdurchlässigkeit. |
| Flächengewicht: | Die Bestimmung des Flächengewichtes erfolgt gemäß DIN EN ISO 29073-1:1992-08. Hierbei handelt es sich um das gemittelte Flächengewicht ($FG_{gesamt}$ [gsm]), d.h. um eine Messung an einem textilen Flächengebilde mit Bereichen mit höherer und niedriger Luftdurchlässigkeit. |
| Young-Modul: | Die Bestimmung des Young-Moduls erfolgt via Spannungs-Dehnungskurve bei Zimmertemperatur (23°C) gemäß ASTM E111 - 04 (2010). |
| Faserdurchmesser: | Die Bestimmung des Faserdurchmessers erfolgt mikroskopisch. |

Bestimmung der Vliesdicke: Die Bestimmung der Vliesdicke erfolgt gemäß ISO 9073-2:1995. Die Dicke "d" wird bestimmt an einem homogenen textilen Flächengebilde mit $FG_{gesamt}$, während die Dicke "D" an einem textilen Flächengebilde mit Bereichen mit höherer und niedriger Luftdurchlässigkeit (Flächengewicht = $FG_{gesamt}$) bestimmt wird.

Bereiche mit hoher Luftdurchlässigkeit:
Die Bestimmung der Fläche mit hoher Luftdurchlässigkeit erfolgt mikroskopisch.

Die Bestimmung des gemittelten Flächengewichts für den Bereich mit höherer Luftdurchlässigkeit erfolgt mittels Ausstanzen der durch L1, L2 definierten Flächen und anschließender Bestimmung des Gewichts der ausgestanzten Flächen unter Berücksichtigung der ausgestanzten Gesamtfläche.

Die Bestimmung der Luftdurchlässigkeiten LDL (hohe Durchlässigkeit ($LDL_{hoch}$) vs niedriger Porosität ($LDL_{niedrig}$) erfolgt rechnerisch mittels folgender Rechenvorschrift:

$$LDL_{gesamt} = \{(LDL_{niedrig}) \times (Fläche\ [\%]/100)\} + \{(LDL_{hoch}) \times (Fläche\ [\%]/100)\}.$$

$LDL_{gesamt}$ ist die gemessene Luftdurchlässigkeit an einem textilen Flächengebilde mit Bereichen mit höherer und niedriger Luftdurchlässigkeit, während $LDL_{niedrig}$ die Luftdurchlässigkeit an einem homogenen textilen Flächengebilde mit Dicke "d" und identischem Flächengewicht wie bei der Bestimmung von $LDL_{gesamt}$ ist.

## Patentansprüche

**1.** Textiles Flächengebilde auf Basis von anorganischen Fasern, vorzugsweise Glasfasern, wobei das textile Flächengebilde ein Faservlies, vorzugsweise ein Glasfaservlies, ist, **dadurch gekennzeichnet, dass** das Faservlies, vorzugsweise das Glasfaservlies, Bereiche mit hoher Luftdurchlässigkeit und Bereiche mit niedriger Luftdurchlässigkeit aufweist und die Fläche der Bereiche mit hoher Luftdurchlässigkeit zwischen 5 und 90% der Gesamtfläche des textilen Flächengebildes beträgt und das Faservlies ein nassgelegtes Vlies ist, die Bereiche mit hoher Luftdurchlässigkeit eine lokale Dicke aufweisen die max. 80% der mittleren Vliesdicke d beträgt, und dass am Rand der Bereiche mit hoher Luftdurchlässigkeit eine Überhöhung vorhanden ist und die Überhöhung $\Delta$ die Differenz aus D minus d ist und max. 20% der Dicke d beträgt, wobei die Dicke "d" an einem homogenen textilen Flächengebilde mit gemitteltem Flächengewicht, und die Dicke "D" an einem textilen Flächengebilde mit Bereichen mit höherer und niedriger Luftdurchlässigkeit gemäß der Messmethode in der Beschreibung bestimmt werden.

2.  Textiles Flächengebilde gemäß Anspruch 1, **dadurch gekennzeichnet, dass** die Bereiche mit hoher Luftdurchlässigkeit und die Bereiche mit niedriger Luftdurchlässigkeit eine Differenz in der Luftdurchlässigkeit gemäß DIN EN ISO 9237:1995-12 von min. 50%, vorzugsweise von min. 100%, aufweisen.

3.  Textiles Flächengebilde gemäß Anspruch 1 oder 2, **dadurch gekennzeichnet, dass** das Flächengewicht in den Bereichen mit hoher Luftdurchlässigkeit maximale 70 Gew.-% des mittleren Flächengewichtes beträgt.

4.  Textiles Flächengebilde gemäß einem oder mehreren der Ansprüche 1 bis 3, **dadurch gekennzeichnet, dass** die Bereiche mit hoher Luftdurchlässigkeit eine Geometrie mit einer größere Länge L1 und einer kleineren Länge L2 aufweisen, wobei L1 > 5mm ist und das Verhältnis L1/ L2 im Bereich von 1 - 10, vorzugsweise 1 - 5, liegt.

5.  Textiles Flächengebilde gemäß einem oder mehreren der Ansprüche 1 bis 4, **dadurch gekennzeichnet, dass** die Bereiche mit hoher Luftdurchlässigkeit durch die Bereiche mit geringer Luftdurchlässigkeit voneinander getrennt sind, wobei die Abstände zwischen den jeweiligen Bereichen mit hoher Luftdurchlässigkeit zwischen 5 und 20mm betragen.

6.  Verwendung eines textilen Flächengebildes gemäß einem oder mehreren der Ansprüche 1 bis 5 zur Herstellung von sandwichartigen Laminat-Verbundwerkstoffen auf Basis von halogenierten Polymeren, insbesondere auf Basis von Polyvinylchlorid (PVC), sowie zur Herstellung von Wand- oder Deckenplatten bei welchen das textile Flächengebilde eine dekorative Deckschicht auf einem Träger bildet oder als textiler Teppichrücken.

7.  Verfahren zur Herstellung von Laminat-Verbundwerkstoffen auf Basis von halogenierten Polymeren, insbesondere auf Basis von Polyvinylchlorid (PVC), umfassend die Maßnahmen:

    (i) Erzeugen, Bereitstellen oder Zuführen eines flächigen Gebildes aus halogeniertem Polymer, insbesondere auf Basis von Polyvinylchlorid (PVC),
    (ii) Aufbringen eines textilen Flächengebildes auf Basis von anorganischen Fasern, vorzugsweise Glasfasern, auf mindestens eine Seite des flächigen Gebildes gemäß Maßnahme (i),
    (iii) Erzeugen, Bereitstellen oder Zuführen und Aufbringen eines zweiten flächigen Gebildes aus halogeniertem Polymer, insbesondere auf Basis von Polyvinylchlorid (PVC), auf das gemäß Maßnahme (ii) erhaltende Gebilde, wobei das Aufbringen des zweiten flächigen Gebildes auf der Seite erfolgt, auf welcher bereits das textile Flächengebilde auf Basis von Glasfasern aufgebracht ist,
    (iv) Laminieren des gemäß Schritt (iii) erhaltenen Gebildes unter Einwirkung von Druck und/oder Temperatur, **dadurch gekennzeichnet, dass**
    (v) das textile Flächengebilde auf Basis von anorganischen Fasern ein Flächengebilde gemäß einem oder mehreren der Ansprüche 1 bis 5 ist und das erste flächige Gebilde aus halogeniertem Polymer und das zweite flächiges Gebilde aus halogeniertem Polymer durch die Bereiche mit hoher Luftdurchlässigkeit in Kontakt stehen und in diesen Bereichen monolithisch miteinander verbunden sind und die monolithische Kontaktfläche der beiden zugewandten Flächen des flächigen Gebildes aus halogeniertem Polymer, insbesondere auf Basis von Polyvinylchlorid (PVC), 5 bis 90 Flächen% der Gesamtfläche des textilen Flächengebildes beträgt.

8.  Sandwichartiger Laminat-Verbundwerkstoff auf Basis von halogenierten Polymeren, insbesondere auf Basis von Polyvinylchlorid (PVC), umfassend:

    (i) ein erstes flächiges Gebilde aus halogeniertem Polymer, insbesondere auf Basis von Polyvinylchlorid (PVC),
    (ii) ein zweites flächiges Gebilde aus halogeniertem Polymer, insbesondere auf Basis von Polyvinylchlorid (PVC),
    (iii) ein textiles Flächengebilde auf Basis von anorganischen Fasern, vorzugsweise Glasfasern, das zwischen dem ersten und dem zweiten flächigen Gebilde angeordnet ist

(iv) das erste flächige Gebilde gemäß (i), das textile Flächengebilde auf Basis von anorganischen Fasern, vorzugsweise Glasfasern, gemäß (ii) und das zweite flächige Gebilde gemäß (iii) durch Laminierung miteinander verbunden sind,

**dadurch gekennzeichnet, dass**

(v) das textile Flächengebilde auf Basis von anorganischen Fasern ein Flächengebilde gemäß einem oder mehreren der Ansprüche 1 bis 5 ist und das erste flächige Gebilde aus halogeniertem Polymer und das zweite flächiges Gebilde aus halogeniertem Polymer durch die Bereiche mit hoher Luftdurchlässigkeit in Kontakt stehen und in diesen Bereichen monolithisch miteinander verbunden sind und die monolithische Kontaktfläche der beiden zugewandten Flächen des flächigen Gebildes aus halogeniertem Polymer, insbesondere auf Basis von Polyvinylchlorid (PVC), 5 bis 90 Flächen% der Gesamtfläche des textilen Flächengebildes beträgt.

9. Verbundwerkstoff umfassend:

(i) ein Trägermaterial, insbesondere eine Gipskartonplatte oder ein faserförmiges Isolationsmaterial

(ii) ein textiles Flächengebilde auf Basis von anorganischen Fasern, vorzugsweise Glasfasern, das auf dem Trägermaterial angeordnet ist,

(iii) das Trägermaterial gemäß (i) und das textile Flächengebilde gemäß (ii) und das durch Laminierung miteinander verbunden sind,

**dadurch gekennzeichnet, dass**

(iv) das textile Flächengebilde auf Basis von anorganischen Fasern ein Flächengebilde gemäß einem oder mehreren der Ansprüche 1 bis 5 ist.

## Claims

1. A textile mat structure based on inorganic fibres, preferably glass fibres, wherein the textile mat structure is a fibre nonwoven, preferably a glass fibre nonwoven, **characterized in that** the fibre nonwoven, preferably the glass fibre nonwoven, comprises regions with high air permeability and regions with low air permeability and the surface area of the regions with high air permeability is between 5% and 90% of the total surface area of the textile mat structure and the fibre nonwoven is a wet laid nonwoven, the regions with high air permeability have a local thickness which is a maximum of 80% of the mean nonwoven thickness "d", and **in that** the edge of the regions with high air permeability is banked up and the banking ∆ is the difference "D" minus "d" and is a maximum of 20% of the thickness "d", wherein the thickness ""d"" is determined on a homogeneous textile mat structure with a mean basis weight and the thickness "D" is determined on a textile mat structure with regions with high and low air permeability in accordance with the measurement method in the description.

2. The textile mat structure as claimed in claim 1, **characterized in that** the regions with high air permeability and the regions with low air permeability have a difference in the air permeability in accordance with DIN EN ISO 9237:1995-12 of a minimum of 50%, preferably of a minimum of 100%.

3. The textile mat structure as claimed in claim 1 or claim 2, **characterized in that** the basis weight in the regions with high air permeability is a maximum of 70% by weight of the mean basis weight.

4. The textile mat structure as claimed in one or more of claims 1 to 3, **characterized in that** the regions with high air permeability have a geometry with a larger length L1 and a smaller length L2, wherein L1 > 5 mm and the ratio L1/L2 is in the range 1 - 10, preferably 1 - 5.

5. The textile mat structure as claimed in one or more of claims 1 to 4, **characterized in that** the regions with high air permeability are separated from each other by the regions with low air permeability, wherein the distances between the respective regions with high air permeability are between 5 and 20 mm.

6. Use of a textile mat structure as claimed in one or more of claims 1 to 5 for the production of sandwich-like laminate composite materials based on halogenated polymers, in particular based on polyvinyl chloride (PVC), as well as for the production of wall or ceiling panels in which the textile mat structure forms a decorative cover layer on a support, or it is a textile carpet backing.

7. A method for the production of laminate composite materials based on halogenated polymers, in particular based on polyvinyl chloride (PVC), comprising the following steps:

(i) producing, providing or supplying a laminar structure formed from halogenated polymer, in particular based on polyvinyl chloride (PVC),

(ii) applying a textile mat structure based on inorganic fibres, preferably glass fibres, onto at least one side of the laminar structure in accordance with step (i),

(iii) producing, providing or supplying and applying a second laminar structure formed from halogenated polymer, in particular based on polyvinyl chloride (PVC), to the structure obtained in accordance with step (ii), wherein the second laminar structure is applied to the side to which the textile mat structure based on glass fibres has already been applied,

(iv) laminating the structure obtained in accordance with step (iii) by applying pressure and/or temperature,

**characterized in that**

(v) the textile mat structure based on inorganic fibres is a mat structure as claimed in one or more of claims 1 to 5 and the first laminar structure formed from halogenated polymer and the second laminar structure formed from halogenated polymer come into contact through the regions with high air permeability and bind together monolithically in these regions and the monolithic contact surface of the two facing surfaces of the laminar structure formed from halogenated polymer, in particular based on polyvinyl chloride (PVC), is 5% to 90% of the total surface area of the textile mat structure.

8. A sandwich-like laminate composite material based on halogenated polymers, in particular based on polyvinyl chloride (PVC), comprising:

(i) a first laminar structure formed from halogenated polymer, in particular based on polyvinyl chloride (PVC),

(ii) a second laminar structure formed from halogenated polymer, in particular based on polyvinyl chloride (PVC),

(iii) a textile mat structure based on inorganic fibres, preferably glass fibres, which is disposed between the first and the second laminar structure,

(iv) the first laminar structure in accordance with (i), the textile mat structure based on inorganic fibres, preferably glass fibres, in accordance with (ii) and the second laminar structure in accordance with (iii) being bonded together by lamination,

**characterized in that**

(v) the textile mat structure based on inorganic fibres is a mat structure as claimed in one or more of claims 1 to 5 and the first laminar structure formed from halogenated polymer and the second laminar structure formed from halogenated polymer come into contact through the regions with high air permeability and bind together monolithically in these regions and the monolithic contact surface of the two facing surfaces of the laminar structure formed from halogenated polymer, in particular based on polyvinyl chloride (PVC), is 5% to 90% of the total surface area of the textile mat structure.

9. A composite material comprising:

(i) a support material, in particular a plasterboard or a fibrous insulating material;

(ii) a textile mat structure based on inorganic fibres, preferably glass fibres, which is disposed on the support material,

(iii) the support material in accordance with (i) and the textile mat structure in accordance with (ii) being bonded together by lamination, **characterized in that**

(iv) the textile mat structure based on inorganic fibres is a mat structure as claimed in one of claims 1 to 5.

**Revendications**

1. Structure bidimensionnelle textile à base de fibres inorganiques, préférentiellement de fibres de verre, ladite structure bidimensionnelle textile étant un non-tissé de fibres, préférentiellement un non-tissé de fibres de verre, **caractérisée en ce que** le non-tissé de fibres, préférentiellement le non-tissé de fibres de verre présente des zones hautement perméables à l'air et des zones faiblement perméables à l'air, et la surface des zones hautement perméables à l'air représente entre 5 et 90 % de la surface totale de la structure bidimensionnelle textile, et le non-tissé de fibres est un non-tissé fabriqué par voie humide, les zones hautement perméables à l'air présentent une épaisseur locale représentant au maximum 80 % de l'épaisseur moyenne d du non-tissé, et qu'en marge des zones hautement perméables à l'air, celles-ci sont pourvues d'une surépaisseur, et la surépaisseur $\Delta$, correspondant à la différence entre D et d, étant inférieure ou égale à 20 % de l'épaisseur d, la détermination de l'épaisseur « d » étant réalisée sur une structure bidimensionnelle textile homogène dont le poids surfacique correspond à la valeur moyenne et celle de l'épaisseur « D » sur une structure bidimensionnelle textile pourvue de zones dont la perméabilité à l'air est relativement haute et relativement basse, en suivant la méthode de mesure présentée dans la description.

**2.** Structure bidimensionnelle textile selon la revendication 1, **caractérisée en ce que** les zones hautement perméables à l'air et les zones faiblement perméables à l'air présentent une différence quant à leur perméabilité à l'air, selon la DIN EN ISO 9237:1995-12, d'au moins 50 %, préférentiellement d'au moins 100 %.

**3.** Structure bidimensionnelle textile selon les revendications 1 ou 2, **caractérisée en ce que** le poids surfacique dans les zones hautement perméables à l'air correspond au maximum à 70 % en poids de la moyenne du poids surfacique.

**4.** Structure bidimensionnelle textile selon une ou plusieurs des revendications 1 à 3, **caractérisée en ce que** des zones hautement perméables à l'air présentent une géométrie avec une longueur plus importante L1 et une longueur moins importante L2, L1 étant > 5 mm et la rapport L1/L2 étant compris entre 1 et 10, préférentiellement entre 1 et 5.

**5.** Structure bidimensionnelle textile selon une ou plusieurs des revendications 1 à 4, **caractérisée en ce que** les zones hautement perméables à l'air sont séparées les unes des autres par des zones faiblement perméables à l'air, la distance entre les zones hautement perméables à l'air étant, à chaque occurrence, comprise entre 5 et 20 mm.

**6.** Utilisation d'une structure bidimensionnelle textile selon une ou plusieurs des revendications 1 à 5 pour fabriquer des matériaux composites stratifiés à structure sandwich qui sont basés sur des polymères halogénés, notamment basés sur du polychlorure de vinyle (PVC) ainsi que pour fabriquer des panneaux destinés aux parois ou au plafond, chez lesquels la structure bidimensionnelle textile forme une couche extérieure décorative, ou bien en tant que support de tapis textile.

**7.** Procédé de fabrication de matériaux composites stratifiés basés sur des polymères halogénés, notamment basés sur du polychlorure de vinyle (PVC), comprenant les actions suivantes :

(i) fabriquer, mettre à disposition ou acheminer une structure bidimensionnelle en polymère halogéné, notamment basée sur du polychlorure de vinyle (PVC),
(ii) appliquer une structure bidimensionnelle textile basée sur des fibres inorganiques, notamment sur des fibres de verre, sur au moins une face de la structure bidimensionnelle selon l'action (i),
(iii) fabriquer, mettre à disposition ou acheminer puis appliquer une seconde structure bidimensionnelle en polymère halogéné, notamment basée sur du polychlorure de vinyle (PVC), sur la structure telle qu'obtenue selon l'action (ii), la seconde structure bidimensionnelle étant appliquée sur la face sur laquelle la structure bidimensionnelle textile basée sur des fibres de verre avait précédemment été appliquée,
(iv) stratifier la structure telle qu'obtenue selon l'étape (iii) en la soumettant à une pression et/ou température, **caractérisé en ce que**
(v) la structure bidimensionnelle textile basée sur des fibres inorganiques est une structure bidimensionnelle selon une ou plusieurs des revendications 1 à 5, et la première structure bidimensionnelle en polymère halogéné et la seconde structure bidimensionnelle en polymère halogéné étant en contact à travers les zones hautement perméables à l'air et étant, dans lesdites zones, liées l'une à l'autre de manière monolithique, la surface de contact monolithique des deux surfaces tournées l'une vers l'autre de la structure bidimensionnelle en polymère halogéné, notamment basée sur du polychlorure de vinyle (PVC), correspondant à 5 à 90 % surfaciques de la surface totale de la structure bidimensionnelle textile.

**8.** Matériau composite stratifié basé sur des polymères halogénés, notamment basé sur du polychlorure de vinyle (PVC), comprenant :

(i) une première structure bidimensionnelle en polymère halogéné, notamment basée sur du polychlorure de vinyle (PVC),
(ii) une seconde structure bidimensionnelle en polymère halogéné, notamment basée sur du polychlorure de vinyle (PVC),
(iii) une structure bidimensionnelle textile basée sur des fibres inorganiques, préférentiellement sur des fibres de verre, laquelle est disposée entre la première et la seconde structures bidimensionnelles,
(iv) la première structure bidimensionnelle selon (i), la structure bidimensionnelle textile basée sur des fibres inorganiques, notamment sur des fibres de verre, selon (ii), et la seconde structure bidimensionnelle selon (iii) étant reliées les unes aux autres par stratification,
**caractérisé en ce que**
(v) la structure bidimensionnelle textile basée sur des fibres inorganiques est une structure bidimensionnelle selon une ou plusieurs des revendications 1 à 5, et la première structure bidimensionnelle en polymère halogéné et la seconde structure bidimensionnelle en polymère halogéné étant en contact à travers les zones hautement perméables à l'air et étant, dans lesdites zones, liées l'une à l'autre de manière monolithique, la surface de contact monolithique des deux surfaces tournées l'une vers l'autre de la structure bidimensionnelle en polymère halogéné, notamment basée sur du polychlorure de vinyle (PVC), correspondant à 5 à 90 % surfaciques de la surface totale de la structure bidimensionnelle textile.

9. Matériau composite, comprenant :

(i) un matériau support, notamment une plaque de plâtre ou un matériau isolant sous forme de fibres,
(ii) une structure bidimensionnelle textile basée sur des fibres inorganiques, préférentiellement sur des fibres de verre, laquelle est disposée sur ledit matériau support,
(iii) le matériau support selon (i) et la structure bidimensionnelle selon (ii) étant reliés l'un à l'autre par stratification,
**caractérisé en ce que**
(iv) la structure bidimensionnelle textile basée sur des fibres inorganiques étant une structure bidimensionnelle selon une ou plusieurs des revendications 1 à 5.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2431173 A1

- US 5462642 A